# EUROPÄISCHE PATENTSCHRIFT

(11) **EP 0 955 805 B1**
(45) Veröffentlichungstag und Bekanntmachung des Hinweises auf die Patenterteilung: **12.02.2003**
(21) Anmeldenummer: 98959844.6
(22) Anmeldetag: 04.11.1998
(51) Int. Cl.: A01M 7/00

(54) **VERTEILERGEBLÄSE**
DISTRIBUTING BLOWER
SOUFFLANTE DE DISTRIBUTION

(30) Priorität: 07.11.1997 DE 19749340
(43) Veröffentlichungstag der Anmeldung: 17.11.1999
(73) Patentinhaber: Pak, Mjongsu, Prof. Dr.-Ing, 51491 Overath (DE)
(72) Erfinder: Pak, Mjongsu, Prof. Dr.-Ing, 51491 Overath (DE)
(74) Vertreter: Beck, Jürgen, Dr. Dipl.-Phys.
(86) Internationale Anmeldenummer: EP9807040
(87) Internationale Veröffentlichungsnummer: WO99023876

(56) Entgegenhaltungen:
- DE-U- 8 815 239
- FR-A- 2 668 399
- GB-A- 749 286
- GB-A- 796 335
- US-A- 2 608 441

## Beschreibung

Die Erfindung betrifft ein Verteilergebläse für in der Land- und Forstwirtschaft eingesetzte chemische Substanzen, insbesondere Pflanzenschutzmittel, umfassend zwei an einem Gerätegestell angeordnete Gebläseeinheiten von denen jede ein Gebläsegehäuse sowie ein in diesem angeordnetes und durch einen Antrieb um eine Laufradachse rotierend angetriebenes Radiallaufrad aufweist, wobei das Radiallaufrad mit dem Gebläsegehäuse einen sich in dem Gebläsegehäuse ausbildenden Gebläseluftstrom erzeugt, der nach Durchtritt durch eine Gehäuseauslaßöffnung einen sich in nur einer Gesamtstromrichtung ausbreitenden Verteilerluftstrom für die chemischen Substanzen bildet, und wobei sich die von den Gebläseeinheiten erzeugten Verteilerluftströme in unterschiedlichen Gesamtstromrichtungen ausbreiten und die Gebläseeinheiten so ausgebildet sind, daß die Gebläseluftströme in den Gebläseeinheiten einen unterschiedlichen Drehsinn bezüglich der jeweiligen Laufradachse aufweisen.

Ein Verteilergebläse mit zwei an einem Gerätegestell angeordneten Gebläseeinheiten ist beispielsweise aus der GB-B-749 286 bekannt. Mit einem derartigen bekannten Verteilergebläse werden jedoch die hohen Anforderungen an eine gleichmäßige Verteilung der chemischen Substanzen, insbesondere wenn diese auf beiden Seiten des Verteilergebläses erfolgen soll, nicht erfüllt.

Die DE-U-8815239.1 offenbart ein Sprühgerät zum Zerstäuben von Flüssigkeiten, bei dem zwei Gebläseräder koaxial hintereinander vorgesehen sind und die beiden Gebläseräder mit gleicher Drehzahl aber in entgegengesetzter Drehrichtung über einen gemeinsamen Antrieb antreibbar sind.

Die GB-A-796335 offenbart eine Sprühmaschine, welche zwei Gebläseräder aufweist, die gegensinnig rotieren können.

Die FR-A-2668399 offenbart eine Sprühvorrichtung mit zwei koaxial angeordneten Gebläserädern, welche sich gegensinnig drehen können.

Der Erfindung liegt die Aufgabe zugrunde, ein Verteilergebläse der gattungsgemäßen Art derart zu verbessern, daß eine möglichst gleichmäßige Verteilung der Pflanzenschutzmittel erreichbar ist.

Diese Aufgabe wird bei einem Verteilergebläse der eingangs beschriebenen Art erfindungsgemäß dadurch gelöst, daß die Radiallaufräder als Trommellaufräder ausgebildet sind, welche in Drehrichtung vorwärts gekrümmte Laufradschaufeln aufweisen.

Mit dieser erfindungsgemäßen Lösung besteht die Möglichkeit, auf beiden Seiten des Verteilergebläses einen von diesem wegführenden Verteilerluftstrom zu erhalten, wobei die Verteilerluftströme gleich ausgebildet sind, da der Drehsinn der Gehäuseluftströme bezüglich der jeweiligen Laufradachse unterschiedlich ist, so daß die sich auf beiden Seiten des Verteilergebläses ausbreitenden Verteilerluftströme eine im wesentlichen identische Verteilung der Strömungsgeschwindigkeit sowie eine im wesentlichen identische Ausbildung der Luftstromfronten aufweisen.

Trommellaufräder - auch als Trommelläufer bezeichnet - haben den Vorteil, daß sie sehr geräuscharm arbeiten und daß sich mit diesen große Luftstromgeschwindigkeiten erreichen lassen.

Mit in Drehrichtung vorwärts gekrümmten Schaufeln sind besonders günstig hohe Luftstromgeschwindigkeiten erzeugbar.

Besonders günstig ist es für die Erzielung der Gebläseluftströme mit unterschiedlichem Drehsinn, wenn die Radiallaufräder der Gebläseeinheiten mit entgegengesetzten Drehrichtungen angetrieben sind und die Gebläsegehäuse die Gebläseluftströme mit der jeweiligen Drehrichtung entsprechendem Drehsinn um die Radiallaufräder herumführen.

Um möglichst identische Gebläseluftströme und somit auch möglichst identische Verteilerluftströme zu erhalten, ist vorzugsweise vorgesehen, daß die Radiallaufräder im wesentlichen identisch ausgebildet sind.

Ferner ist vorzugsweise vorgesehen, daß die Gebläsegehäuse im wesentlichen identisch ausgebildet sind.

Hinsichtlich der konstruktiven Vereinfachung und der einfachen Herstellbarkeit ist es besonders vorteilhaft, wenn die Gebläseeinheiten im wesentlichen identisch ausgebildet sind, da in diesem Fall das erfindungsgemäße Verteilergebläse aus zwei separaten aber im wesentlichen identischen Gebläseeinheiten aufgebaut werden kann, wobei die eine Gebläseeinheit gegenüber der anderen um ungefähr 180° um eine vertikale Drehachse gedreht angeordnet ist, so daß die eine Gebläseeinheit den Verteilerluftstrom auf der einen Seite des Verteilergebläses und die andere den Verteilerluftstrom auf der anderen Seite des Verteilergebläses erzeugt.

Um möglichst gleichmäßige Bedingungen in dem Verteilerluftstrom zu erhalten, ist vorzugsweise vorgesehen, daß die Gebläseeinheiten so ausgebildet sind, daß die von diesen erzeugten Verteilerluftströme in einer ungefähr quer zur Laufradachse verlaufenden Querrichtung eine geringfügig gekrümmte oder im wesentlichen geradlinig verlaufende Luftstromfront aufweisen. Mit einer derartig ausgebildeten Luftstromfront läßt sich eine besonders vorteilhafte gleichmäßige Verteilung der auszubringenden chemischen Substanzen erreichen.

Unter einer Luftstromfront ist eine hypothetische Fläche zu verstehen, welche von dem Verteilerluftstrom mitgeführt wurde.

Besonders günstig ist ein erfindungsgemäß erzeugter Verteilerluftstrom dann, wenn die Strömungsgeschwindigkeiten des Verteilerluftstroms entlang der Querrichtung größenordnungsmäßig gleich groß sind und näherungsweise in der gleichen Richtung verlaufen.

Hinsichtlich der Ausbildung der Gehäuseauslaßöffnung wurden im Zusammenhang mit der bisherigen Erläuterung der erfindungsgemäßen Lösung ebenfalls keine näheren Angaben gemacht. Bei den aus dem Stand der Technik bekannten spiral- oder schneckenförmigen Gebläsegehäusen weist die Gehäuseauslaßöffnung in der Querrichtung eine Erstreckung auf, die ungefähr dem Durchmesser des Radiallaufrades entspricht.

Ein besonders bevorzugtes Ausführungsbeispiel der erfindungsgemäßen Lösung sieht dagegen vor, daß die Gehäuseauslaßöffnung in der Querrichtung eine Erstreckung aufweist, die mindestens einem doppelten des Durchmessers des Radiallaufrades entspricht. Eine derartige sehr ausgedehnte Gehäuseauslaßöffnung schafft die Möglichkeit, andererseits eine günstige und gewünschte Ausbildung des Verteilerluftstroms zu erreichen und andererseits den Verteilerluftstrom bereits im Bereich der Gehäuseauslaßöffnung so auszuweiten, daß keine große Divergenz des Verteilerluftstroms mehr notwendig ist, um die mit den chemischen Substanzen zu besprühenden Kulturen, beispielsweise Reb- oder Obstkulturen mit dem Verteilerluftstrom zu beaufschlagen.

Noch vorteilhafter ist die erfindungsgemäße Lösung dann, wenn die Erstreckung der Gehäuseauslaßöffnung in der Querrichtung mindestens das 2,5fache des Durchmessers des Radiallaufrads beträgt.

Um andererseits zwar die Gehäuseauslaßöffnung in der Querrichtung möglichst ausgedehnt zu gestalten , die Luftverhältnisse des Gebläseluftstroms und des daraus entstehenden Verteilerluftstroms jedoch noch definierbar zu halten, ist vorzugsweise vorgesehen, daß die Erstreckung der Gehäuseauslaßöffnung in der Querrichtung weniger als das 4fache des Durchmessers des Radiallaufrades beträgt. Noch besser ist es, wenn die Erstreckung der Auslaßöffnung in der Querrichtung weniger als das 3fache des Durchmessers des Radiallaufrades beträgt.

Um im Einzelfall die Gesamtstromrichtung des Verteilerluftstroms entsprechend dem gewünschten Einsatzzweck ausrichten zu können, ist vorzugsweise vorgesehen, daß die Gebläseeinheiten an dem Gerätegestell ausrichtbar angeordnet sind. Eine derartige ausrichtbare Anordnung der Gebläseeinheit schafft die Möglichkeit, die Gebläseeinheit als Ganzes so auszurichten, daß der Verteilerluftstrom sich jeweils in der gewünschten Gesamtstromrichtung ausbreitet.

Die Gebläseeinheiten können dabei in unterschiedlichster Richtung ausrichtbar sein. So wäre eine Ausrichtbarkeit um eine ungefähr vertikale und/oder eine ungefähr horizontale Achse von Vorteil. Besonders vorteilhaft ist dabei die Ausrichtbarkeit um eine ungefähr horizontale Achse, da damit in einfacher Weise eine Anpassung des Verteilerluftstroms an die Höhe der mit der chemischen Substanz zu beaufschlagenden Kultur erfolgen kann. Beispielsweise wäre die Höheneinstellung bei Rebkulturen anders als bei Obstkulturen insbesondere mit hohen Obstbäumen.

Besonders günstig läßt sich die Ausrichtbarkeit der Gebläseeinheiten um eine ungefähr horizontale Achse dann realisieren, wenn die Gebläsegehäuse gegenüber dem Gerätegestell jeweils um die Laufradachse drehbar angeordnet sind. Eine derartige Drehung des Gebläsegehäuses führt gleichzeitig zu einer Bewegung der Gebläseauslaßöffnung und somit zu einer Veränderung der Strömungsrichtung des Verteilerluftstroms, ohne daß die Notwendigkeit besteht, das gelagerte und angetriebene Radiallaufrad mitzubewegen.

Eine Ausrichtung der Gebläsegehäuse läßt sich besonders günstig dann realisieren, wenn diese einen drehfesten und mit dem Gerätegestell verbindbaren Gehäuseteil aufweisen, an welchem ein drehbarer Gehäuseteil der Gebläsegehäuse gelagert ist, so daß durch Drehung des drehbaren Gehäuseteils, welcher auch die Gebläseauslaßöffnung umfaßt, die Ausrichtung des Verteilerluftstroms geändert werden kann.

Im einfachsten Fall ist dabei das drehfeste Gehäuseteil so ausgebildet, daß das ein Wandabschnitt des jeweiligen Gebläsegehäuses bildet, während der übrige Gehäuseteil des Gebläsegehäuses dann der drehbare Gehäuseteil ist.

Eine konstruktiv sehr günstige Lösung sieht dabei vor, daß der drehfeste Gehäuseteil auf einer Antriebsseite für das Laufrad angeordnet ist, da sich somit die ohnehin erforderliche Lagerung des Laufrades mit dem drehfesten Gehäuseteil kombinieren lassen. Besonders günstig ist es hierbei, wenn der drehfeste Gehäuseteil ein Lager für eine Laufradwelle trägt, so daß die Fixierung des drehfesten Gehäuseteils gleichzeitig eine Fixierung für das Lager der Laufradwelle darstellt.

Um ferner noch eine Justierung des gesamten Gebläsegehäuses relativ zum Gerätegestell vornehmen zu können, ist vorgesehen, daß der drehfeste Gehäuseteil verstellbar an dem Gerätegestell angeordnet ist.

Ein besonders günstiger Aufbau des erfindungsgemäßen Verteilergebläses sieht vor, daß die separaten Gebläsegehäuse spiegelsymmetrisch zu einer Längsmittelebene des Verteilergebläses angeordnet sind, so daß bereits sich aufgrund der Anordnung der Gebläsegehäuse die Voraussetzungen für sich zu beiden Seiten des Verteilergebläses ausbreitende und im wesentlichen gleich ausgebildete Verteilerluftströme gegeben sind.

Bei Vorsehen einer ausschließlich spiegelsymmetrischen Anordnung der Gebläsegehäuse zur Längsmittelebene wäre es erforderlich, die separaten Gebläsegehäuse auf genau gegenüberliegenden Seiten der Längsmittelebene anzuordnen. Dies würde jedoch eine sehr große Erstreckung des Verteilergebläses in einer Richtung quer zur Längsmittelebene erfordern. Aus diesem Grund ist vorteilhafterweise vorgesehen, daß die Gebläsegehäuse in einer im wesentlichen in Richtung der Laufradachsen verlaufenden Versatzrichtung aufeinanderfolgend an dem Gerätegestell angeordnet sind. Damit ist die Möglichkeit geschaffen, durch den Versatz in Längsrichtung der Laufradachsen die Gebläsegehäuse gestaffelt anzuordnen, so daß eine besonders bevorzugte Lösung sowohl eine spiegelsymmetrische Anordnung der separaten Gebläsegehäuse, aber auch noch zusätzlich mit Versatz in Richtung der Laufradachsen vorsieht.

Um ferner für die gesamte Anordnung der Gebläsegehäuse an dem Gerätegestell möglichst wenig Raum zu benötigen, ist günstigerweise vorgesehen, daß die Gebläseeinheiten so an dem Gerätegestell angeordnet sind, daß deren Laufradachsen mit Abstand voneinander verlaufen.

Eine besonders zweckmäßige Anordnung sieht vor, daß die Laufradachsen ungefähr parallel zueinander verlaufen.

Ferner ist - um insbesondere wiederum eine möglichst gleiche Ausbildung der sich zu beiden Seiten des Verteilergebläses ausbildenden Verteilerluftströme zu erreichen - vorgesehen, daß die Laufradachsen in ungefähr gleicher Höhe über einer Bodenfläche angeordnet sind, über welche das Verteilergebläse bewegbar ist.

Hinsichtlich des Antriebs der Radiallaufräder der erfindungsgemäßen Gebläseeinheit wurden keine näheren Angaben gemacht. So sieht ein vorteilhaftes Ausführungsbeispiel vor, daß die Radiallaufräder eine einer Saugseite gegenüberliegende Antriebsseite aufweisen.

Vorzugsweise ist dabei die Antriebsseite so gewählt, daß jedes Radiallaufrad mit seiner Antriebsseite der jeweils anderen Gebläseeinheit zugewandt angeordnet ist, so daß dadurch die Möglichkeit gegeben ist, die Saugseite der jeweiligen Gebläseeinheit auf der der anderen Gebläseeinheit abgewandten Seite anzuordnen und somit möglichst optimale Bedingungen für das Ansaugen der Luft zu erhalten.

Hinsichtlich der Realisierung des Antriebs der einzelnen Radiallaufräder ist es dabei außerdem günstig, wenn Antriebselemente für die Radiallaufräder in einem Zwischenraum zwischen den Gebläsegehäusen angeordnet sind, so daß dadurch die gesamten Antriebselemente für die Radiallaufräder einerseits geschützt in dem Zwischenraum und andererseits raumsparend angeordnet werden können.

Ferner ist vorzugsweise noch - insbesondere zum Erreichen der für Radiallaufräder gewünschten Drehzahlen - eine Getriebeeinheit erforderlich, wobei die Getriebeeinheit vorzugsweise ein Übersetzungsgetriebe und/oder ein unterschiedliche Drehrichtungen erzeugendes Getriebe umfaßt. Eine derartige Getriebeeinheit zum Antreiben der Antriebselemente ist vorzugsweise auf einer der Bodenfläche zugewandten Seite der Gebläsegehäuse am Gerätegestell angeordnet.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Seitenansicht eines Ausführungsbeispiels eines erfindungsgemäßen Verteilergebläses als Teil einer fahrbaren Gebläsespritze;
- Fig. 2: eine Draufsicht auf das erfindungsgemäße Verteilergebläse in Richtung des Pfeils A in Fig. 1;
- Fig. 3: einen Schnitt längs Linie 3-3 in Fig. 1;
- Fig. 4: eine Draufsicht auf ein erfindungsgemäßes Radiallaufrad in Richtung des Pfeils A in Fig. 1;
- Fig. 5: einen Schnitt längs Linie 5-5 in Fig. 4;
- Fig. 6: einen Schnitt längs Linie 6-6 in Fig. 1.

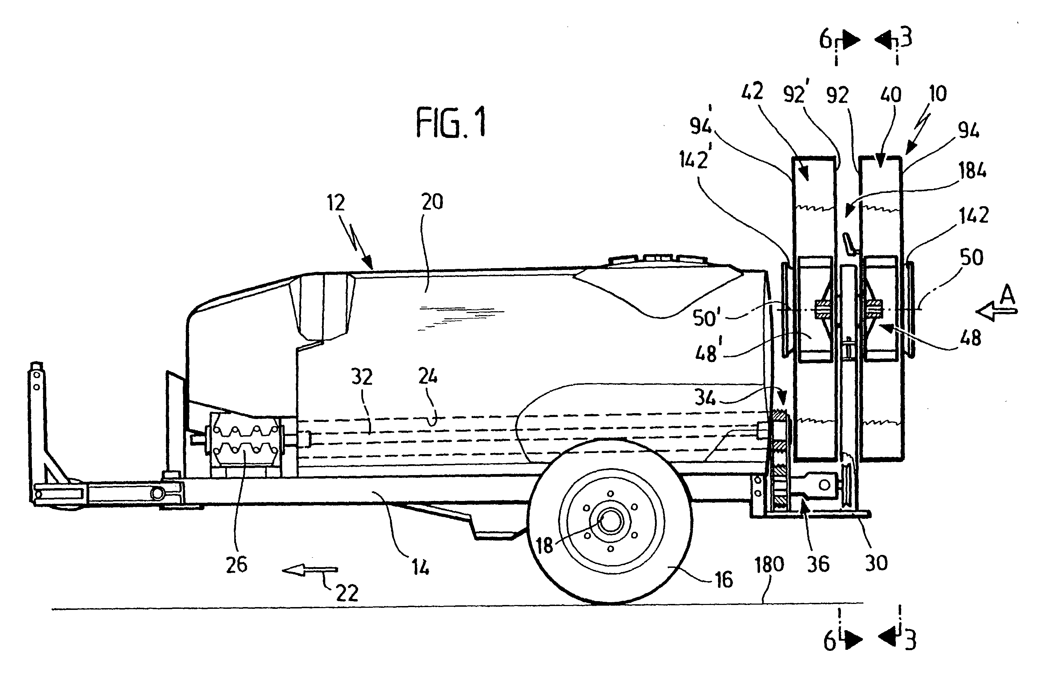

Ein in Fig. 1 dargestelltes, als Ganzes mit 10 bezeichnetes Ausführungsbeispiel eines erfindungsgemäßen Verteilergebläses ist vorzugsweise an einer als Ganzes mit 12 bezeichneten Gebläsespritze zum Ausbringen von Pflanzenschutzmitteln montiert, wobei die Gebläsespritze 12 als Anhängerspritze ausgebildet ist und ein Fahrgestell 14 aufweist, welches auf einer zwei Räder 16 tragenden Achse 18 ruht. Auf dem Fahrgestell 14 ist ein Tank 20 für Spritzmittel angeordnet, welcher einen sich in einer Fahrtrichtung 22 erstreckenden Längsdurchbruch 24 aufweist.

In Fahrtrichtung 22 gesehen ist vor dem Tank 20 eine Pumpe 26 auf dem Fahrgestell 14 angeordnet und hinter dem Tank 20 das Verteilergebläse 10, welches ein Gerätegestell 30 aufweist, mit welchem das Verteilergebläse 10 an dem Fahrgestell 14 montiert ist.

Zum Antrieb des Verteilergebläses 10 erstreckt sich ausgehend von der Pumpe 26 eine Gelenkwelle 32 durch den Längsdurchbruch 24 des Tanks 20 hindurch bis zu einem Riemengetriebe 34, über welches ein an dem Gerätegestell 30 gehaltenes Übersetzungsgetriebe 36 des Verteilergebläses 10 antreibbar ist, wobei das Übersetzungsgetriebe 36 vorzugsweise ungefähr in Höhe des Fahrgestells 14 angeordnet ist.

Die Pumpe 26 ist ferner ihrerseits auf einer der Gelenkwelle 32 gegenüberliegenden Seite mittels einer üblichen Zapfwelle antreibbar.

Das erfindungsgemäße Verteilergebläse kann aber auch im Zusammenhang mit einer bekannten üblichen Aufsattelspritze zum Einsatz kommen, wobei in diesem Fall das Gerätegestell 30 an einer üblichen Dreipunktaufhängung einer landwirtschaftlichen Zugmaschine montierbar ist und die Aufsattelspritze vorzugsweise noch die Pumpe für das Spritzmittel, gegebenenfalls auch noch einen Tank für dieses umfaßt.

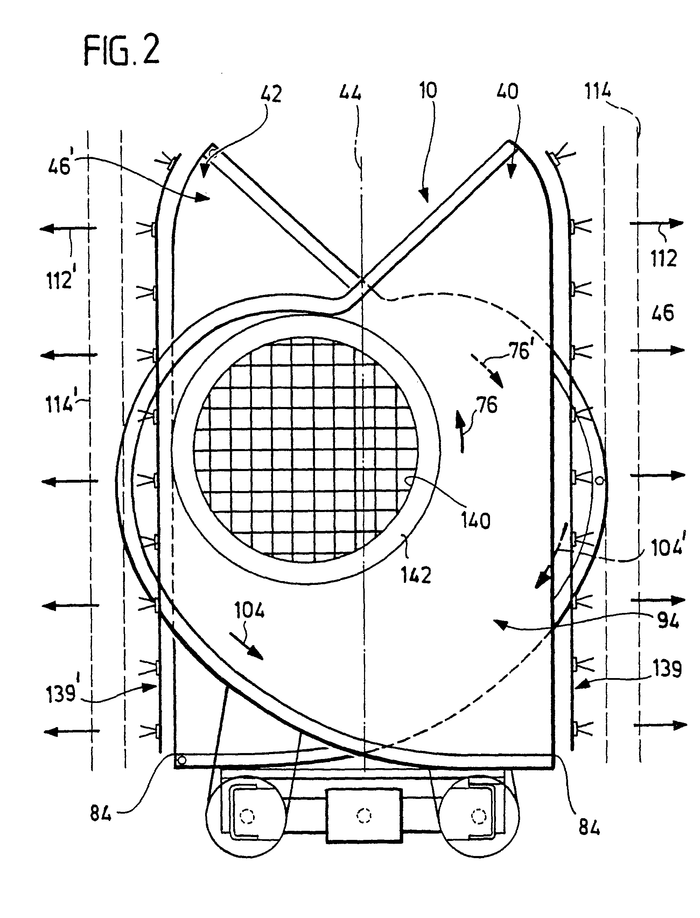

Das erfindungsgemäße Verteilergebläse 10 umfaßt, wie in Fig. 1 und 2 dargestellt, zwei getrennte Gebläseeinheiten 40 und 42, welche identisch ausgebildet, jedoch gegenüber einer in Fahrtrichtung 22 verlaufenden vertikalen Längsmittelebene 44 des Verteilergebläses gespiegelt und zusätzlich in Fahrtrichtung 22 gegeneinander versetzt angeordnet sind.

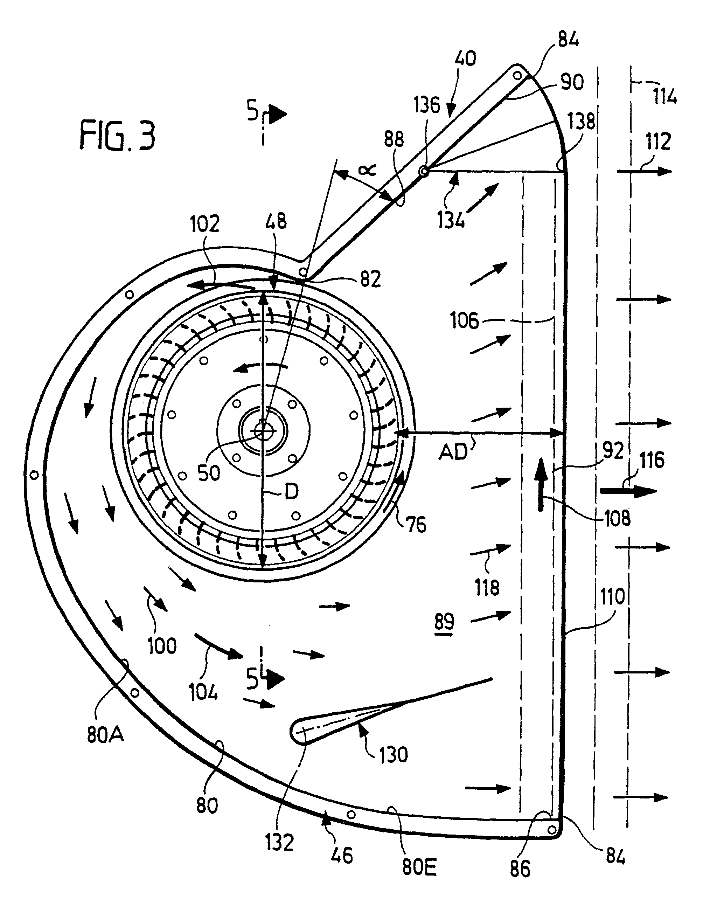

Jede dieser Gebläseeinheiten 40, 42 umfaßt, wie in Fig. 2 und 3 dargestellt, ein selbständiges als Ganzes mit 46 bzw. 46' bezeichnetes Gebläsegehäuse, in welchem ein als Ganzes mit 48 bezeichnetes Radiallaufrad angeordnet ist, welches um eine Laufradächse 50 wie später noch im einzelnen beschrieben, rotierend in dem Gebläsegehäuse 46 angeordnet ist.

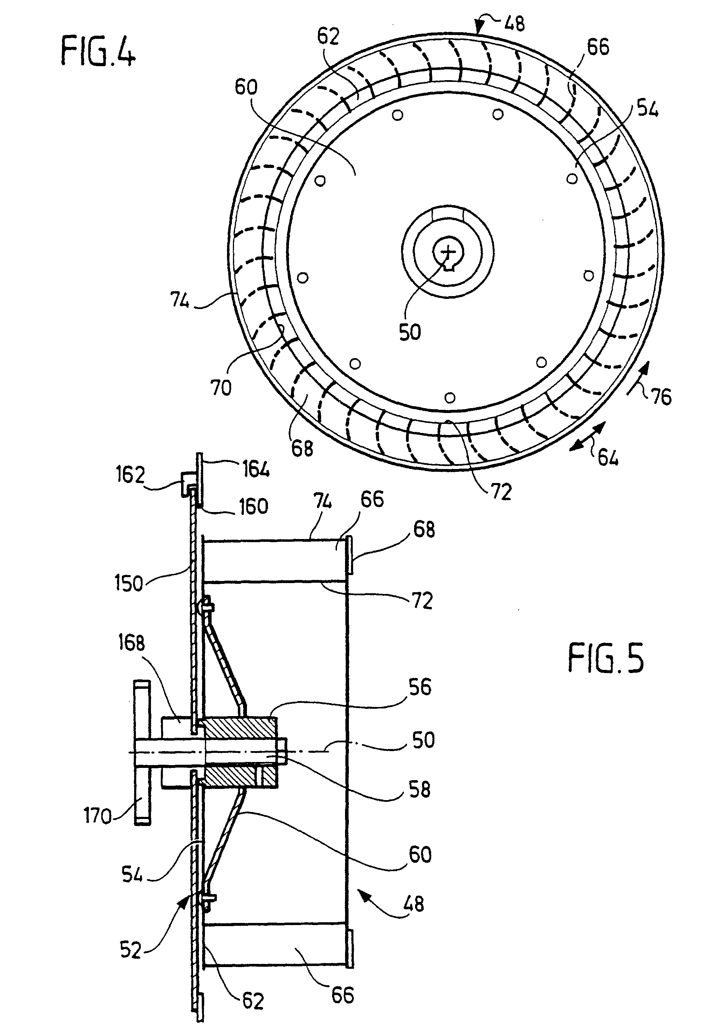

Das Radiallaufrad 48 ist, wie in Fig. 4 und 5 dargestellt, als Trommellaufrad ausgebildet und umfaßt daher einen Laufradträger 52, welcher in Form einer zur Laufradachse 50 konzentrischen Kreisscheibe ausgebildet ist und eine Nabe 56 zur Aufnahme einer Laufradantriebswelle 58 trägt. Die Nabe 56 erhebt sich dabei auf einer Seite von der Laufradscheibe 54 und erstreckt sich in ein Inneres des Trommellaufrades 48 hinein. Ausgehend von einem im Abstand von der Laufradscheibe 54 liegenden Bereich der Nabe 56 erstreckt sich ein kegelstumpfförmiger Luftumlenkkörper 60 von der Nabe 56 bis zu einem radial bezüglich der Nabe 56 außenliegenden Bereich der Laufradscheibe 54 und ist sowohl mit der Nabe 56 als auch mit der Laufradscheibe 54 fest verbunden, so daß die Nabe 56, der Luftumlenkkörper 60 und die Laufradscheibe 54 eine in sich steife Einheit bilden.

Die Laufradscheibe 54 trägt in einem radial außenliegenden Ringbereich 62 in azimutaler Richtung 64 im Abstand voneinander angeordnete Laufradschaufeln 66, die sich parallel zur Laufradachse 50 erstrecken und an ihren der Laufradscheibe 54 gegenüberliegenden Enden durch einen koaxial zur Laufradachse 50 verlaufenden Ring 68 miteinander verbunden sind, welcher jedoch eine zentrale Ansaugöffnung 70 des Radiallaufrades 48 freigibt, so daß durch die Ansaugöffnung 70 eine Saugseite des Laufrades gebildet ist, welche der Laufradscheibe 54 mit der Nabe 56 gegenüberliegend angeordnet ist, und somit die Laufradscheibe 54 mit der Nabe 56 eine Antriebsseite des Radiallaufrades 48 darstellen.

Die Laufradschaufeln 66 erstrecken sich dabei von einer vorzugsweise bezüglich des Luftumlenkkörpers radial außenliegenden und koaxial zur Laufradachse 50 verlaufenden inneren Zylinderfläche 72 bis zu einer äußeren Zylinderfläche 74, welche ungefähr im selben radialen Abstand von der Laufradachse 50 angeordnet ist, wie eine Außenkontur der Laufradscheibe 54 und des Rings 68.

Das Radiallaufrad 48 ist somit als sogenanntes Trommellaufrad ausgebildet.

Ferner sind die Laufradschaufeln 66 dieses Trommellaufrads 48 noch in Richtung einer Drehrichtung 76 desselben in Vorwärtsrichtung gekrümmt angeordnet, das heißt, daß eine Schnittlinie jeder Laufradschaufel 66 mit der äußeren Zylinderfläche 74 in der Drehrichtung 76 gegenüber einer Schnittlinie der Laufradschaufel 66 mit der inneren Zylinderfläche 72 versetzt verläuft, so daß eine Tangente an einen austrittsseitigen Bereich der Laufradschaufeln 66 in die Drehrichtung 76 weist und mit dieser einen spitzen Winkel einschließt.

Ein derartiges Trommellaufrad 48 mit in Vorwärtsrichtung gekrümmten Laufradschaufeln 66 dient vorzugsweise dazu, bei geringem Druckunterschied einen Gebläseluftstrom mit hoher Strömungsgeschwindigkeit zu erzeugen.

Dieser aus dem Radiallaufrad 48 austretende Gebläseluftstrom wird durch das als Luftführungsvorrichtung ausgebildete Gebläsegehäuse 46 geführt, insbesondere durch eine erste Gehäusewand 80, welche sich einerseits parallel zur Laufradachse 50 erstreckt und andererseits von einem dem Radiallaufrad 48 nächstliegenden Zungenbereich 82 ausgehend mit einem Anfangsbereich 80A zunächst spiralähnlich zur Laufradachse 50 verläuft und somit ausgehend von dem dem Radiallaufrad 48 nächstliegenden Zungenbereich 82 einen stets größer werdenden radialen Abstand von der Laufradachse 50 aufweist. An dem Anfangsbereich 80A der Gehäusewand 80 schließt sich ein Erweiterungsbereich 80E der Gehäusewand 80 an und dieser verläuft bis zu einer Gehäuseauslaßöffnung 84, an welcher er mit einem Endbereich 86 endet, wobei dieser Endbereich 86 eine Seite der Gehäuseauslaßöffnung 84 begrenzt.

Ferner verläuft von dem dem Radiallaufrad 48 nächstliegenden Zungenbereich 82 ausgehend eine sich quer zur Laufradachse 50 im wesentlichen geradlinig erstreckende und den Erweiterungsbereich begrenzende zweite Gehäusewand 88 bis zu einem dem Endbereich 86 gegenüberliegenden Endbereich 90, welcher ebenfalls eine Seite der Gehäuseauslaßöffnung 84 begrenzt. Dabei erstreckt sich die Gehäusewand 88 einerseits parallel zur Laufradachse 50 und andererseits in einem spitzen Winkel α von größenordnungsmäßig 30° bis 40°, vorzugsweise ungefähr 35°, zu einer den Zungenbereich 82 schneidenden radialen Richtung zur Laufradachse 50.

Die erste Gehäusewand 80 bildet mit dem Anfangsbereich 80A einen Umschlingungsmantel für das Radiallaufrad 48, welcher ungefähr die Hälfte desselben luftführend umschließt und ungefähr die andere Hälfte offen läßt.

Ferner begrenzen die Gehäusewand 80 mit dem Erweiterungsbereich 80E und die Gehäusewand 88 insgesamt einen Erweiterungskanal 89, welcher mit der Gehäuseauslaßöffnung 84 endet und eine Sprühhöhe festlegt.

Vorzugsweise beträgt ein Abstand des Zungenbereichs 82 von dem Radiallaufrad 48 ungefähr das 0,15fache eines Durchmessers D desselben.

Eine bevorzugte Lösung sieht vor, daß der Abstand der Endbereiche 86 und 90 ungefähr einem 2,5 fachen des Durchmessers D des Radiallaufrades 48 entspricht. Durch diesen Abstand wird somit die Sprühhöhe des Verteilerluftstroms festgelegt.

Zweckmäßigerweise ist die Gehäuseauslaßöffnung 84 in einem Abstand AD von dem Radiallaufrad 48 angeordnet, welcher größer als ungefähr das 0,5fache des Durchmessers D des Radiallaufrades ist und kleiner als das ungefähr 1,5fach des Durchmessers D. Vorzugsweise entspricht der Abstand AD größenordnungsmäßig dem Durchmesser D.

Außerdem wird die Gehäuseauslaßöffnung 84 noch durch zwei parallel verlaufende und ungefähr einen einer Laufradbreite entsprechenden Abstand aufweisende Seitenwände 92 und 94 begrenzt, welche sich in Ebenen senkrecht zur Laufradachse 50 erstrecken und in Richtung der Laufradachse 50 gesehen beiderseits an den Gehäusewänden 80 und 88 anliegen.

Durch das sich in der Drehrichtung 76 drehende Radiallaufrad 48 wird nun in dem Gehäuse 46 ein Gehäuseluftstrom 100 erzeugt, welcher aus dem Radiallaufrad 48 mit einer in der Drehrichtung 76 sowie in radialer Richtung verlaufenden Strömungsrichtung 102 austritt, und unter Beibehaltung des durch die Drehrichtung 76 vorgegebenen Drehsinns in dem Gebläsegehäuse 46 den Gebläseluftstrom 100 bildet, welcher einerseits mit einem Drehsinn 104 sich noch um die Laufradachse 50 dreht und dann in Richtung der Gehäuseauslaßöffnung 84 eine Luftstromfront 106 bildet, welche ungefähr parallel zu einer quer zur Laufradachse 50 verlaufenden und sich von Endbereich 86 zu Endbereich 90 erstreckenden Querrichtung 108 verläuft und außerdem ungefähr parallel zu einer Fläche 110, welche durch die Gehäuseauslaßöffnung 84 aufgespannt ist.

Diese Luftstromfront 106 bildet nach Austreten aus der Gehäuseauslaßöffnung einen Verteilerluftstrom 112, welcher ungefähr geradlinig oder leicht gekrümmt verlaufende Luftstromfronten 114 aufweist, die quer, insbesondere ungefähr senkrecht zu einer Gesamtströmungsrichtung 116 verlaufen, mit welcher sich der Verteilerluftstrom 112 ausbreitet. Das Gebläsegehäuse 46 ist dabei vorzugsweise so geformt, daß der Gebläseluftstrom 100 unmittelbar vor Austritt aus der Gebläseauslaßöffnung 84 Strömungsgeschwindigkeiten 118 aufweist, die einerseits quer zur Querrichtung 108 verlaufen und andererseits jedoch längs der Querrichtung 108 größenordnungsmäßig gleich groß, vorzugsweise ungefähr gleich groß sind.

Zur genauen Bestimmung der sich ausbildenden Luftstromfront 106 des Gebläseluftstroms 100 unmittelbar vor der Gehäuseauslaßöffnung 84 ist nahe des Endbereichs 86 der Gehäusewand 80 und im Abstand von der Gehäusewand 80 beispielsweise eine Einstellklappe 130 oder auch mehrere vorgesehen, welche sich zwischen den Seitenwänden 92 und 94 des Gebläsegehäuses 46 parallel zur Laufradachse 50 erstreckt und um eine parallel zur Laufradachse 50 verlaufende Achse 132 verschwenkbar ist, um die sich ausbildende Luftstromfront 106 einzustellen.

Ferner ist nahe des Endbereichs 90 ebenfalls eine Luftleitklappe 134 vorgesehen, welche um eine Achse 136 schwenkbar ist, die nahe der Gehäusewand 88 liegt, wobei sich die Luftleitklappe 134 von der Achse 136 im wesentlichen bis zum Endbereich 90, vorzugsweise bis zur Gehäuseauslaßöffnung 84 erstreckt. Diese Luftleitklappe 134 dient dazu, den von der Luftstromfront 106 durchströmten Bereich der Gehäuseauslaßöffnung 84, insbesondere die Erstreckung derselben in der Querrichtung 108, veränderbar zu gestalten, so daß ein zwischen einem Endbereich 138 der Luftleitklappe 134 und dem Endbereich 90 der Gehäusewand 88 liegender Bereich der Gehäuseauslaßöffnung 84 nicht von der Luftstromwand 106 durchsetzt ist.

Mit den Luftleitklappen 130 und 134 sind somit der Verlauf der Luftstromfront 106 sowie die Geschwindigkeiten 118 längs derselben einstellbar.

Der aus der Gebläseeinheit 40 austretende Verteilerluftstrom 112 verläuft dabei von der Längsmittelebene 44 weg und quer zu dieser und breitet sich somit auf einer Seite des Verteilergebläses 10 aus.

In gleicher Weise erzeugt die Gebläseeinheit 42 einen Verteilerluftstrom 112', der sich auf der gegenüberliegenden Seite der Längsmittelebene und quer zur Längsmittelebene 44 von dem Verteilergebläse 10 weg ausbreitet (Fig. 2). Jeder der vorzugsweise zur Längsmittelebene 44 symmetrisch ausgebildeten Verteilerluftströme 112, 112' trägt die zu verteilende chemische Substanz mit sich, wobei ein Eindüsen der chemischen Substanz in die Verteilerluftströme 112, 122' mittels beispielsweise nahe der Gehäuseauslaßöffnungen 84, 84' angeordneten Düsenreihen 139, 139' erfolgt (Fig.2 ).

Da die Gebläseeinheit 42 mit der Gebläseeinheit 40 identisch ausgebildet ist, werden für deren Teile dieselben Bezugszeichen wie für die Teile der Gebläseeinheit 40 verwendet und zusätzlich mit einem ' versehen, so daß hinsichtlich der Beschreibung derselben auf die Ausführungen zur Gebläseeinheit 40 Bezug genommen werden kann.

Das Ansaugen der Luft erfolgt über eine in der Seitenwand 94 vorgesehenen Gehäuseeinlaßöffnung 140 an welcher sich eine von der Gehäusewand 94 weg erstreckende Einströmdüse 142 anschließt.

Die Einströmdüse 142 der Gebläseeinheit 40 liegt dabei auf einer dem Tank 20 abgewandten Rückseite des Verteilergebläses 10, während die Einströmdüse 142' der Gebläseeinheit 42 auf einer dem Tank 20 zugewandten Vorderseite des Verteilergebläses 10 angeordnet ist.

Ferner sind die Gebläseeinheiten 40 und 42 so angeordnet, daß die Drehrichtung 76' des Radiallaufrades 48' entgegengesetzt zur Drehrichtung 76 des Radiallaufrades 48 verläuft und ferner ist somit auch der Drehsinn 104 des Gebläseluftstroms 100 in der Gebläseeinheit 40 entgegengesetzt zum Drehsinn 104' des Gebläseluftstroms in der Gebläseeinheit 42.

Um die Gesamtströmungsrichtung 116 einstellen zu können, ist jedes der Gebläsegehäuse 46 um die Laufradachse 50 drehbar an dem Gerätegestell 30 gelagert. Hierzu ist die Seitenwand 92 des Gebläsegehäuses 46 zweigeteilt und weist eine Wandscheibe 150 mit einer zur Laufradachse 50 konzentrischen äußeren Kreiskontur 152 auf. Die Wandscheibe 150 ist ihrerseits mittels eines Rahmenbügels 154 drehfest an Tragsäulen 156 des Gerätegestells 30 gehalten, welche sich von einem bodenseitigen Träger 158, welcher unterhalb der Gebläsegehäuse 46, 46' verläuft, nach oben in Richtung der Wandscheibe 150 erstrecken.

Die Wandscheibe 150 hat vorzugsweise einen Durchmesser, welcher größer ist als das jeweilige Radiallaufrad 48 und deckt somit eine Öffnung 160 in der Seitenwand 92 ab, die einen derartigen Durchmesser hat, daß durch diese das Radiallaufrad 48 in das Gebläsegehäuse 46 einsetzbar ist.

An der zur Laufradachse 50 konzentrischen kreisförmigen Außenkontur 152 der Wandscheibe 150 greifen beispielsweise drei Lagerkörper 162 an, welche auf der kreisförmigen Außenkontur 152 gleitend sitzen und fest mit einem die Öffnung 160 tragenden drehbaren Teil 164 der Seitenwand 92 verbunden sind. Somit dient die zur Laufradachse 50 konzentrische kreisförmige Außenkontur 152 als Führungsbahn für die Lagerkörper 162 und somit auch für den drehbaren Teil 164 der Seitenwand 92, um diesen um die Laufradachse 50 zu verdrehen. Da der drehbare Teil 164 der Seitenwand 92 fest mit den Gehäusewänden 80 und 88 und der gegenüberliegenden Seitenwand 94 verbunden ist, besteht somit die Möglichkeit, einen wesentlichen Teil des Gebläsegehäuses 46 um die Laufradachse 50 zu verschwenken. Die Lagerkörper 162 sind vorzugsweise noch mit Klemmelementen 166 versehen, welche ein Feststellen des drehbaren Teils 164 des Seitenwand 92 in der jeweils gedrehten Position ermöglicht.

Die Wandscheibe 150 ist ferner von der Antriebswelle 58 des Radiallaufrades 48 durchsetzt und trägt außerdem ein Lager 168 für die Antriebswelle 58 des Radiallaufrades 48, wobei die Welle 58 auf ihrer der Nabe 56 gegenüberliegenden Seite eine Riemenscheibe 170 trägt, welche zum Antrieb der Welle 58 dient.

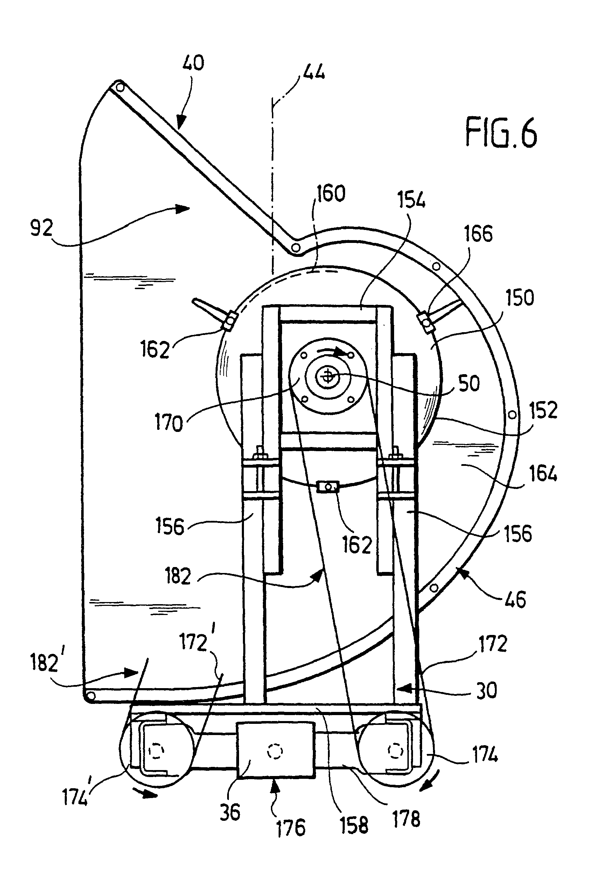

Wie ferner in Fig. 6 dargestellt, erfolgt ein Antrieb der auf der Welle 58 sitzenden Riemenscheibe 170 über einen Antriebsriemen 172, der seinerseits über eine antriebsseitige Riemenscheibe 174 verläuft. Die antriebsseitige Riemenscheibe 174 ist Teil einer Getriebeeinheit 176, welche nicht nur das Übersetzungsgetriebe 36 umfaßt, sondern auch ein Verteilgetriebe 178, welches zwei Riemenscheiben 174 und 174' trägt, welche, wie in Fig. 6 dargestellt, im angetriebenen Fall in entgegengesetzte Richtungen drehen, wobei die Riemenscheibe 174 die Gebläseeinheit 40 antreibt, während die Riemenscheibe 174' die Gebläseeinheit 42 antreibt. Beide Riemenscheiben 174 und 174' sind bezüglich der Längsmittelebene 44 im Abstand voneinander angeordnet, vorzugsweise in gleicher Höhe über einer Bodenfläche 180 und liegen jeweils unterhalb der Gebläsegehäuse 46, so daß sich der Antriebsriemen 172 ausgehend von der jeweiligen Riemenscheibe 174, 174' nach oben in Richtung der auf der Laufradantriebswelle 58 sitzenden laufradseitigen Riemenscheibe 170 erstreckt, um diese anzutreiben. Die Riemenscheiben 170 und 174 bilden zusammen mit dem Antriebsriemen 172 ein als Ganzes mit 182 bezeichnetes Riemengetriebe, welches zum Antrieb des Radiallaufrades 48 der Gebläseeinheit 40 dient und zwischen den Gebläseeinheiten 40 und 42 liegt, insbesondere zwischen den einander zugewandt angeordneten Seitenwänden 92 und 92' der mit Abstand voneinander angeordneten selbständigen Gebläseeinheiten 40 und 42.

In gleicher Weise ist zum Antrieb der Gebläseeinheit 42 das Riemengetriebe 182' vorgesehen, von welchem der Antriebsriemen 172' lediglich in Teilen und nur die Riemenscheiben 174' dargestellt sind.

Wie sich aus Fig. 1 und 2 ergibt, sind die Laufradachsen 50 und 50' der Gebläseeinheiten 40 und 42 in gleicher Höhe über der Bodenfläche 180 und spiegelsymmetrisch zur Längsmittelebene 44 angeordnet, wobei sich die Laufradachsen 50 und 50' vorzugsweise parallel zur Längsmittelebene 44 auf gegenüberliegenden Seiten derselben erstrecken.

Damit besteht die Möglichkeit, die laufradseitigen Riemenscheiben beider Radiallaufräder 48, 48' nahe einer senkrecht auf den Laufradachsen 50, 50' stehenden Ebene und somit raumsparend zwischen den getrennten Gebläseeinheiten 40 und 42 anzuordnen, so daß auch die Riemengetriebe 182 und 182' raumsparend in einem Zwischenraum 184 zwischen den Gebläseeinheiten 40 und 42 verlaufen, wobei in diesem Zwischenraum ebenfalls auch noch die bereits beschriebene drehfeste Fixierung der Wandscheiben 150 der Gebläsegehäuse 46 erfolgt.

Um ferner den Antriebsriemen 172 spannen zu können, ist der Rahmenbügel 154 gegenüber den Tragsäulen 156 in Längsrichtung derselben, also relativ zur Getriebeeinheit 176 verstellbar und fixierbar angeordnet.

## Patentansprüche

1. Verteilergebläse (10) für in der Land- und Forstwirtschaft eingesetzte chemische Substanzen, insbesondere Pflanzenschutzmittel, umfassend zwei an einem Gerätegestell (14) angeordnete Gebläseeinheiten (40, 42), von denen jede ein Gebläsegehäuse (46, 46') sowie ein in diesem angeordnetes und durch einen Antrieb um eine Laufradachse (50) rotierend angetriebenes Radiallaufrad(48) aufweist, wobei das Radiallaufrad (48) mit dem Gebläsegehäuse(46,46') einen sich in dem Gebläsegehäuse (46, 46') ausbildenden Gebläseluftstrom (100) erzeugt, der nach Durchtritt durch eine Gehäuseauslaßöffnung (84) einen sich in nur einer Gesamtstromrichtung ausbreitenden Verteilerluftstrom für die chemischen Substanzen bildet und wobei sich die von den Gebläseeinheiten (40, 42) erzeugten Verteilerluftströme in unterschiedliche Gesamtstromrichtungen ausbreiten und die Gebläseeinheiten (40, 42) so ausgebildet sind, daß die Gebläseluftströme (100) in den Gebläseeinheiten (40, 42) einen unterschiedlichen Drehsinn ( 104, 104') bezüglich der jeweiligen Laufradachse (50) aufweisen, **dadurch gekennzeichnet, daß** die Radiallaufräder (48) als Trommellaufräder ausgebildet sind, welche in Drehrichtung (76) vorwärts gekrümmte Laufradschaufeln (66) aufweisen.

2. Verteilergebläse nach Anspruch 1, **dadurch gekennzeichnet, daß** die Radiallaufräder (48) der Gebläseeinheiten (40, 42) mit entgegengesetzten Drehrichtungen (76, 76') angetrieben sind und die Gebläsegehäuse (46, 46') die Gebläseluftströme (100) mit der jeweiligen Drehrichtung (76, 76') entsprechendem Drehsinn (104, 104') um die Radiallaufräder (48) herumführen.

3. Verteilergebläse nach Anspruch 1, **dadurch gekennzeichnet, daß** die Radiallaufräder (48) im wesentlichen identisch ausgebildet sind.

4. Verteilergebläse nach einem der voranstehenden Ansprüche, **dadurch gekennzeichnet, daß** die Gebläsegehäuse (46) im wesentlichen identisch ausgebildet sind.

5. Verteilergebläse nach einem der voranstehenden Ansprüche, **dadurch gekennzeichnet, daß** die Gebläseeinheiten (40, 42) im wesentlichen identisch ausgebildet sind.

6. Verteilergebläse nach einem der voranstehenden Ansprüche, **dadurch gekennzeichnet, daß** die Gebläseeinheiten (40, 42) so ausgebildet sind, daß die von diesen erzeugten Verteilerluftströme (112,112') in einer ungefähr quer zur Laufradachse verlaufenden Querrichtung (108) geringfügig gekrümmte oder im wesentlichen geradlinig verlaufende Luftstromfronten (114, 114') erzeugen.

7. Verteilergebläse nach Anspruch 6, **dadurch gekennzeichnet, daß** Strömungsgeschwindigkeiten des Verteilerluftstroms (112) entlang der Querrichtung (108) größenordnungsmäßig gleich groß sind und näherungsweise in gleicher Richtung verlaufen.

8. Verteilergebläse nach einem der voranstehenden Ansprüche, **dadurch gekennzeichnet, daß** die Gehäuseauslaßöffnung (84) in der Querrichtung (108) eine Erstreckung aufweist, die mindestens einem Doppelten eines Durchmessers (D) des Radiallaufrads (48) beträgt.

9. Verteilergebläse nach Anspruch 8, **dadurch gekennzeichnet, daß** die Erstreckung der Gehäuseauslaßöffnung (84) in der Querrichtung (108) mindestens das 2,5fache des Durchmessers (D) des Radiallaufrads (48) beträgt.

10. Verteilergebläse nach einem der voranstehenden Ansprüche, **dadurch gekennzeichnet, daß** die Erstreckung der Gehäuseauslaßöffnung (84) in der Querrichtung (108) weniger als das 4fache des Durchmessers (D) des Radiallaufrades (48) beträgt.

11. Verteilergebläse nach Anspruch 10, **dadurch gekennzeichnet, daß** die Erstreckung der Gehäuseauslaßöffnung (84) in der Querrichtung (108) weniger als das 3fache des Durchmessers (D) des Radiallaufrades (48) beträgt.

12. Verteilergebläse nach einem der voranstehenden Ansprüche, **dadurch gekennzeichnet, daß** die Gebläseeinheiten (40, 42) an dem Gerätegestell (30) einzeln ausrichtbar angeordnet sind.

13. Verteilergebläse nach Anspruch 12, **dadurch gekennzeichnet, daß** die Gebläsegehäuse (46, 46') gegenüber dem Gerätegestell (10) jeweils um die Laufradachse (50, 50') drehbar angeordnet sind.

14. Verteilergebläse nach Anspruch 12 oder 13, **dadurch gekennzeichnet, daß** die Gebläsegehäuse (46, 46') einen drehfesten und mit dem Gerätegestell (30) verbindbaren Gehäuseteil (150) aufweisen, an welchem ein drehbarer Gehäuseteil (164) gelagert ist.

15. Verteilergebläse nach Anspruch 14, **dadurch gekennzeichnet, daß** der drehfeste Gehäuseteil (150) einen Wandabschnitt des jeweiligen Gebläsegehäuses (46) bildet.

16. Verteilergebläse nach Anspruch 14 oder 15, **dadurch gekennzeichnet, daß** bei jedem Gebläsegehäuse der drehfeste Gehäuseteil (150) auf einer Antriebsseite für das Radiallaufrad (48) angeordnet ist.

17. Verteilergebläse nach einem der Ansprüche 14 bis 16, **dadurch gekennzeichnet, daß** der drehfeste Gehäuseteil (150) jedes Gebläsegehäuses ein Lager für eine Laufradantriebswelle (158) trägt.

18. Verteilergebläse nach einem der Ansprüche 14 bis 17, **dadurch gekennzeichnet, daß** der drehfeste Gehäuseteil (150) jedes Gebläsegehäuses verstellbar an dem Gerätegestell (30) angeordnet ist.

19. Verteilergebläse nach einem der voranstehenden Ansprüche, **dadurch gekennzeichnet, daß** die Gebläsegehäuse (46, 46') spiegelsymmetrisch zu einer Längsmittelebene (44) des Verteilergebläses (10) angeordnet sind.

20. Verteilergebläse nach einem der voranstehenden Ansprüche, **dadurch gekennzeichnet, daß** die Gebläsegehäuse (46, 46') in einer im wesentlichen in Richtung/der Laufradachsen (50, 50') verlaufenden Versatzrichtung mit Zwischenraum aufeinanderfolgend an dem Gerätegestell (30) angeordnet sind.

21. Verteilergebläse nach einem der voranstehenden Ansprüche, **dadurch gekennzeichnet, daß** die Gebläseeinheiten (40, 42) so an dem Gerätegestell (30) angeordnet sind, daß deren Laufradachsen (50, 50') mit Abstand voneinander verlaufen.

22. Verteilergebläse nach Anspruch 21, **dadurch gekennzeichnet, daß** die Laufradachsen (50, 50') ungefähr parallel zueinander verlaufen.

23. Verteilergebläse nach Anspruch 21 oder 22, **dadurch gekennzeichnet, daß** die Laufradachsen (50, 50') in ungefähr gleicher Höhe über einer Bodenfläche (180) angeordnet sind, über welche das Verteilergebläse (10) bewegbar ist.

24. Verteilergebläse nach einem der voranstehenden Ansprüche, **dadurch gekennzeichnet, daß** die Radiallaufräder (48, 48') eine einer Saugseite gegenüberliegende Antriebsseite aufweisen.

25. Verteilergebläse nach Anspruch 24, **dadurch gekennzeichnet, daß** jedes Radiallaufrad (48) mit seiner Antriebsseite der jeweils anderen Gebläseeinheit (40, 42) zugewandt angeordnet ist.

26. Verteilergebläse nach Anspruch 25, **dadurch gekennzeichnet, daß** Antriebselemente (182) für die Radiallaufräder (48) in einem Zwischenraum zwischen den Gebläsegehäusen (46, 46') angeordnet sind.

27. Verteilergebläse nach Anspruch 26, **dadurch gekennzeichnet, daß** eine Getriebeeinheit (176) zum Antreiben der Antriebselemente (182) auf einer der Bodenfläche (180) zugewandten Seite der Gebläsegehäuse (46, 46') am Gerätegestell (30)zugeordnet ist.

## Claims

1. Distributing blower (10) for chemical substances used in agriculture and forestry, in particular for plant protection agents, comprising two blower units (40, 42), which are disposed on a device frame (14) and each comprise a blower housing (46, 46') containing a radial impeller (48), which is set in rotation about an impeller axis (50) by a drive, wherein the radial impeller (48) with the blower housing (46, 46') generates a blower air flow (100), which develops in the blower housing (46, 46') and after passing through a housing outlet opening (84) forms a distributing air flow for the chemical substances, which disperses in only one overall flow direction, and wherein the distributing air flows generated by the blower units (40, 42) disperse in different overall flow directions and the blower units (40, 42) are designed in such a way that the blower air flows (100) in the blower units (40, 42) have a different sense of rotation (104, 104') relative to the respective impeller axis (50), **characterized in that** the radial impellers (48) take the form of drum impellers, which have impeller blades (66) curved forward in direction of rotation (76) .

2. Distributing blower according to claim 1, **characterized in that** the radial impellers (48) of the blower units (40, 42) are driven in opposite directions of rotation (76, 76') and the blower housings (46, 46') convey the blower air flows (100) around the radial impellers (48) in a sense of rotation (104, 104') corresponding to the respective direction of rotation (76, 76').

3. Distributing blower according to claim 1, **characterized in that** the radial impellers (48) are of a substantially identical construction.

4. Distributing blower according to one of the preceding claims, **characterized in that** the blower housings (46) are of a substantially identical construction.

5. Distributing blower according to one of the preceding claims, **characterized in that** the blower units (40, 42) are of a substantially identical construction.

6. Distributing blower according to one of the preceding claims, **characterized in that** the blower units (40, 42) are designed in such a way that the distributing air flows (112, 112'), which are generated thereby, generate slightly curved or substantially rectilinearly extending air flow fronts (114, 114') in a transverse direction (108) extending approximately at right angles to the impeller axis.

7. Distributing blower according to claim 6, **characterized in that** flow rates of the distributing air flow (112) along the transverse direction (108) are of the same order of magnitude and extend approximately in the same direction.

8. Distributing blower according to one of the preceding claims, **characterized in that** the housing outlet opening (84) in the transverse direction (108) has an extent, which is at least double a diameter (D) of the radial impeller (48).

9. Distributing blower according to claim 8, **characterized in that** the extent of the housing outlet opening (84) in the transverse direction (108) is at least 2.5 times the diameter (D) of the radial impeller (48).

10. Distributing blower according to one of the preceding claims, **characterized in that** the extent of the housing outlet opening (84) in the transverse direction (108) is less than 4 times the diameter (D) of the radial impeller (48).

11. Distributing blower according to claim 10, **characterized in that** the extent of the housing outlet opening (84) in the transverse direction (108) is less than 3 times the diameter (D) of the radial impeller (48).

12. Distributing blower according to one of the preceding claims, **characterized in that** the blower units (40, 42) are disposed in an individually alignable manner on the device frame (30).

13. Distributing blower according to claim 12, **characterized in that** the blower housings (46, 46') are disposed so as to be rotatable relative to the device frame (10) in each case about the impeller axis (50, 50').

14. Distributing blower according to claim 12 or 13, **characterized in that** the blower housings (46, 46') comprise a non-rotatable housing part (150), which is connectable to the device frame (30) and on which a rotatable housing part (164) is mounted.

15. Distributing blower according to claim 14, **characterized in that** the non-rotatable housing part (150) forms a wall portion of the respective blower housing (46).

16. Distributing blower according to claim 14 or 15, **characterized in that** the non-rotatable housing part (150) of each blower housing is disposed at a driving side for the radial impeller (48).

17. Distributing blower according to one of claims 14 to 16, **characterized in that** the non-rotatable housing part (150) of each blower housing carries a bearing for an impeller drive shaft (158).

18. Distributing blower according to one of claims 14 to 17, **characterized in that** the non-rotatable housing part (150) of each blower housing is disposed in an adjustable manner on the device frame (30).

19. Distributing blower according to one of the preceding claims, **characterized in that** the blower housings (46, 46') are disposed mirror-symmetrically relative to a longitudinal centre plane (44) of the distributing blower (10).

20. Distributing blower according to one of the preceding claims, **characterized in that** the blower housings (46, 46') are disposed successively with clearance on the device frame (30) in an offset direction extending substantially in the direction of the impeller axes (50, 50').

21. Distributing blower according to one of the preceding claims, **characterized in that** the blower units (40, 42) are so disposed on the device frame (30) that their impeller axes (50, 50') extend at a distance from one another.

22. Distributing blower according to claim 21, **characterized in that** the impeller axes (50, 50') extend approximately parallel to one another.

23. Distributing blower according to claim 21 or 22, **characterized in that** the impeller axes (50, 50') are disposed at approximately the same height above a ground surface (180), over which the distributing blower (10) is movable.

24. Distributing blower according to one of the preceding claims, **characterized in that** the radial impellers (48, 48') have a driving side lying opposite a suction side.

25. Distributing blower according to claim 24, **characterized in that** each radial impeller (48) is disposed with its driving side facing the respective other blower unit (40, 42).

26. Distributing blower according to claim 25, **characterized in that** drive elements (182) for the radial impellers (48) are disposed in a gap between the blower housings (46, 46').

27. Distributing blower according to claim 26, **characterized in that** on the device frame (30) a gear unit (176) for driving the drive elements (182) is associated with the blower housings (46, 46') at a side facing the ground surface (180).

## Revendications

1. Soufflante de distribution (10) pour des substances chimiques utilisées en agriculture et sylviculture, en particulier des produits phytosanitaires, comprenant deux unités de soufflante (40, 42) agencées sur un bâti de machine (14), dont chacune présente un carter de soufflante (46, 46') ainsi qu'un rotor radial (48) agencé dans celui-ci et entraîné en rotation autour d'un axe de rotor (50) par un entraînement, le rotor radial (48) engendrant avec le carter de soufflante (46, 46') un écoulement d'air soufflé (100) qui se forme dans le carter de soufflante (46, 46') et qui, après être passé à travers un orifice de sortie du carter (84), forme pour les substances chimiques un écoulement d'air de distribution ne se propageant que dans une direction totale d'écoulement, les écoulements d'air de distribution engendrés par les unités de soufflante (40, 42) se propageant dans différentes directions d'écoulement total et les unités de soufflante (40, 42) étant réalisées de telle sorte que les écoulements d'air soufflé (100) présentent dans les unités de soufflante (40, 42) un sens de rotation différent (104, 104') par rapport à l'axe de rotor (50) respectif, **caractérisée en ce que** les rotors radiaux (48) sont réalisés sous forme de rotors en tambour qui présentent des aubes de rotor (66) recourbées vers l'avant en direction de rotation (76).

2. Soufflante de distribution selon la revendication 1, **caractérisée en ce que** les rotors radiaux (48) des unités de soufflante (40, 42) sont entraînés avec des directions de rotation opposées (76, 76') et **en ce que** les carters de soufflante (46, 46') font passer les écoulements d'air soufflé (100) autour des rotors radiaux (48) avec un sens de rotation (104, 104') correspondant à la direction de rotation respective.

3. Soufflante de distribution selon la revendication 1, **caractérisée en ce que** les rotors radiaux (48) sont réalisés de manière sensiblement identique.

4. Soufflante de distribution selon l'une des revendications précédentes, **caractérisée en ce que** les carters de soufflante (46) sont réalisés de manière sensiblement identique.

5. Soufflante de distribution selon l'une des revendications précédentes, **caractérisée en ce que** les unités de soufflante (40, 42) sont réalisées de manière sensiblement identique.

6. Soufflante de distribution selon l'une des revendications précédentes, **caractérisée en ce que** les unités de soufflante (40, 42) sont réalisées de telle sorte que les courants d'air de distribution (112, 112') engendrés par celles-ci engendrent dans une direction transversale (108) s'étendant approximativement transversalement à l'axe de rotor des fronts d'écoulement d'air (114, 114') légèrement recourbés ou s'étendant de manière sensiblement rectiligne.

7. Soufflante de distribution selon la revendication 6, **caractérisée en ce que** les vitesses d'écoulement de l'écoulement d'air de distribution (112) sont d'ordre de grandeur égal le long de la direction transversale (108) et s'étendent approximativement dans la même direction.

8. Soufflante de distribution selon l'une des revendications précédentes, **caractérisée en ce que** l'orifice de sortie de carter (84) présente dans la direction transversale (108) une extension qui représente au moins le double d'un diamètre (D) du rotor radial (48).

9. Soufflante de distribution selon la revendication 8, **caractérisée en ce que** l'extension de l'orifice de sortie de carter (84) dans la direction transversale (108) est d'au moins deux fois et demi le diamètre (D) du rotor radial (48).

10. Soufflante de distribution selon l'une des revendications précédentes, **caractérisée en ce que** l'extension de l'orifice de sortie de carter (84) dans la direction transversale (108) est inférieure à quatre fois le diamètre (D) du rotor radial (48).

11. Soufflante de distribution selon la revendication 10, **caractérisée en ce que** l'extension de l'orifice de sortie de carter (84) dans la direction transversale (108) est inférieure au triple du diamètre (D) du rotor radial (48).

12. Soufflante de distribution selon l'une des revendications précédentes, **caractérisée en ce que** les unités de soufflante (40, 42) sont agencées de manière à pouvoir être orientées individuellement sur le bâti de machine (30).

13. Soufflante de distribution selon la revendication 12, **caractérisée en ce que** les carters de soufflante (46, 46') sont agencés rotatifs autour de l'axe de rotor (50, 50') respectif par rapport au bâti de machine (10).

14. Soufflante de distribution selon l'une ou l'autre des revendications 12 et 13, **caractérisée en ce que** les carters de soufflante (46, 46') présentent une partie de carter (150) solidaire en rotation et susceptible d'être reliée au bâti de machine (30) et sur laquelle est montée une partie de carter rotative (164).

15. Soufflante de distribution selon la revendication 14, **caractérisée en ce que** la partie de carter (150) solidaire en rotation forme un tronçon de paroi du carter de soufflante (46) respectif.

16. Soufflante de distribution selon l'une ou l'autre des revendications 14 et 15, **caractérisée en ce que** dans chaque carter de soufflante, la partie de carter (150) solidaire en rotation est agencée sur un côté entraînement pour le rotor radial (48).

17. Soufflante de distribution selon l'une des revendications 14 à 16, **caractérisée en ce que** la partie de carter (150) solidaire en rotation de chaque carter de soufflante porte un palier pour un arbre d'entraînement (158) du rotor.

18. Soufflante de distribution selon l'une des revendications 14 à 17, **caractérisée en ce que** la partie de carter (150) solidaire en rotation de chaque carter de soufflante est agencée de manière réglable sur le bâti de machine (30).

19. Soufflante de distribution selon l'une des revendications précédentes, **caractérisée en ce que** les carters de soufflante (46, 46') sont agencés de manière symétrique par rapport à un plan médian longitudinal (44) de la soufflante de distribution (10).

20. Soufflante de distribution selon l'une des revendications précédentes, **caractérisée en ce que** les carters de soufflante (46, 46') sont agencés sur le bâti de machine (30) en se succédant avec un interstice, dans une direction de décalage s'étendant sensiblement en direction des axes de rotor (50, 50').

21. Soufflante de distribution selon l'une des revendications précédentes, **caractérisée en ce que** les unités de soufflante (40, 42) sont agencées sur le bâti de machine (30) de telle manière que leurs axes de rotor (50, 50') s'étendent à distance l'un de l'autre.

22. Soufflante de distribution selon la revendication 21, **caractérisée en ce que** les axes de rotor (50, 50') s'étendent à peu près parallèles l'un par rapport à l'autre.

23. Soufflante de distribution selon l'une ou l'autre des revendications 21 et 22, **caractérisée en ce que** les axes de rotor (50, 50') sont agencés à peu près à même hauteur au-dessus d'une surface de fond (180) au-dessus de laquelle la soufflante de distribution (10) peut être déplacée.

24. Soufflante de distribution selon l'une des revendications précédentes, **caractérisée en ce que** les rotors radiaux (48, 48') présentent un côté moteur opposé à un côté aspiration.

25. Soufflante de distribution selon la revendication 24, **caractérisée en ce que** chaque rotor radial (48) est agencé avec son côté moteur tourné vers l'autre unité de soufflante (40, 42) respective.

26. Soufflante de distribution selon la revendication 25, **caractérisée en ce que** des éléments d'entraînement (182) pour les rotors radiaux (48) sont agencés dans un espace intermédiaire entre les carters de soufflante (46, 46').

27. Soufflante de distribution selon la revendication 26, **caractérisée en ce qu'**une unité de transmission (176) pour entraîner les éléments d'entraînement (182) est agencée sur une face tournée vers la surface de fond (180), du carter de soufflante (46, 46') sur le bâti de machine (30).
